# EUROPÄISCHE PATENTANMELDUNG

(11) **EP 3 929 239 A2**
(43) Veröffentlichungstag der Anmeldung: **29.12.2021**
(21) Anmeldenummer: 21191712.5
(22) Anmeldetag: 03.02.2020
(51) Int. Cl.: C08J 7/04

(54) **BEHÄLTNIS ZUR VERWAHRUNG EINER KÖRPERFLÜSSIGKEIT**

(30) Priorität: 01.02.2019 DE 102019102597
(62) Teilanmeldung aus: 20703965.2
(71) Anmelder: DC Diagnostics Concept UG (Haftungbeschränkt), 52076 Aachen (DE)
(72) Erfinder:
(74) Vertreter: Bauer, Dirk

(57) **Zusammenfassung**

Die Erfindung betrifft ein Behältnis zur Verwahrung einer Körperflüssigkeit, insbesondere ein Blutentnahmeröhrchen, mit einem Innenraum zur Unterbringung der Körperflüssigkeit und einer den Innenraum umschließenden Wandung, wobei eine dem Innenraum des Behältnisses zugewandte Oberfläche der Wandung eine Kontaktfläche bildet, wobei die Kontaktfläche zumindest zum Teil mit einer Beschichtung versehen ist.

Um ein Behältnis zur Verwahrung einer Körperflüssigkeit bereitzustellen, das sich durch eine Beschichtung auszeichnet, die sich zur Stabilisierung der Körperflüssigkeit nach der Entnahme eignet, wird erfindungsgemäß vorgesehen, dass die Beschichtung
a. PEG/PEO-PPO-Copolymere,
b. Poly-(3-Methacryloylaminopropyl)-(2-Carboxyethyl)-Dimethylmmonium-Carboxybetaln-Methylacrylamid (pCBMAA-1) oder
c. Polypeptid-basierte Blockcopolypeptide
umfasst.

Des Weiteren betrifft die Erfindung ein Verfahren zur Beschichtung einer Kontaktfläche eines Behältnisses zur Verwahrung einer Körperflüssigkeit.

## Beschreibung

### Einleitung

Die Erfindung betrifft ein Behältnis zur Verwahrung einer Körperflüssigkeit, insbesondere ein Blutentnahmeröhrchen mit einem Innenraum zur Unterbringung der Körperflüssigkeit und einer den Innenraum umschließenden Wandung, wobei eine dem Innenraum des Behältnisses zugewandte Oberfläche der Wandung eine Kontaktfläche bildet, wobei die Kontaktfläche zumindest zum Teil mit einer Beschichtung versehen ist.

Darüber hinaus betrifft die Erfindung ein Verfahren zur Beschichtung einer Kontaktfläche eines Behältnisses zur Verwahrung einer Körperflüssigkeit.

### Stand der Technik

Im Rahmen des diagnostischen Prozesses ermöglicht die Charakterisierung von quantitativen Biomarker-Konzentrationen und -Aktivitäten sowie Zell- und Partikelmorphologien im Blut und in anderen Körperflüssigkeiten (extravasalen Flüssigkeiten (EVF)) in Verbindung mit der Anamnese die klinische Diagnoseentscheidung. Voraussetzung für eine sichere Entscheidungsfindung ist der möglichst hohe Grad der präanalytischen Stabilisierung von Blut und EVF nach der Entnahme aus dem Blutgefäß sowie eine ex-vivo-Lagerung bis zur Analytik. Gegenwärtig werden entnommene Proben von einer Körperflüssigkeit bis zur eigentlichen Analyse in Glas- oder Plastikröhrchen, meist aus Polypropylen (PP), verwahrt. Hierbei kommt es nach dem Verlassen der Körperflüssigkeiten aus dem Patientenkörper zu zahlreichen Veränderungsprozessen bei allen Bestandteilen dieser Flüssigkeiten, insbesondere des Blutes. In den Röhrchen kommt es durch den Kontakt der entnommenen Körperflüssigkeit mit der Wandung des Röhrchens unter anderem zur Proteinadsorption, Zelladhäsionen und zur Gerinnung der Körperflüssigkeit. Zur Stabilisierung ihrer zahlreichen und unterschiedlichen Bestandteile, deren Konzentrationen und Aktivitäten (z.B. in Blut) besteht die übliche Vorgehensweise in der Hinzugabe von Additiven wie EDTA, Citrat oder Heparin in das Röhrchen. Allerdings eignet sich nicht jedes Additiv für jeden Biomarker, sodass der behandelnde Arzt in Abhängigkeit der vermuteten Krankheit ein spezielles Röhrchen wählen muss. Weiterhin sind die Verweildauer, die Temperaturbeständigkeit oder auch die Lichtexpositionsdauer in den Behältnissen stark begrenzt und können bei einer Überschreitung ebenfalls zu falschen Analyseresultaten führen. Zusätzlich können die Additive wie EDTA, Citrat oder Heparin lediglich die Blutgerinnung hemmen. Zahlreiche andere Aspekte des Degradationsprozesses werden nicht verhindert.

Ein Behältnis zur Verwahrung einer Körperflüssigkeit geht aus der Patentanmeldung EP 1 199 104 B1 hervor. Hier wird ein Blutentnahmeröhrchen aus Polypropylen offenbart, das die Adhäsion von Blutbestandteilen an der Kontaktfläche des Blutentnahmeröhrchens verringert. Geeignete Beschichtungsmaterialien sind die hydrophilen Polymere Polyvinylalkohol, Polyvinylacetat, Polyvinylpyrrolidon (PVP), Polystyrolsulfonat und Copolymere sowie Kombinationen davon. Die hydrophilen Polymere werden mittels Sprüh- oder Dipverfahren auf die Innenseite der Blutentnahmeröhrchen aufgebracht und nach einer anschließenden Luft- oder Ofentrocknung mittels Strahlung vernetzt. Zusätzlich können die Blutentnahmeröhrchen Additive enthalten, welche die Gerinnung von Blut fördern oder hemmen.

Aus dem Patent US 5,830,539 geht ein Verfahren zur Funktionalisierung und Beschichtung eines Substrats hervor. Die Beschichtung soll sich dazu eignen, die Biokompatibilität des Substrats zu erhöhen. Hierbei wird ein erstes funktionalisierendes Reagenz auf das Substrat aufgebracht, wodurch mittels Nitren-Addition eine kovalente Bindung an das Substrat bewirkt werden soll. Das erste funktionalisierende Reagenz weist hierzu eine Azid-Gruppe und eine erste funktionalisierende Gruppe, beispielsweise einen Aktivester, auf, wobei die Azid-Gruppe dazu vorgesehen ist, mit dem Substrat zu reagieren während die erste funktionalisierende Gruppe die Bindung eines zweiten funktionalisierenden Reagenzes an das erste funktionalisierende Reagenz ermöglichen soll. Das zweite funktionalisierende Reagenz weist ebenfalls eine funktionalisierende Gruppe auf, die an das Substrat gebunden werden soll, beispielsweise Enzyme, Antikörper, Diagnostika oder therapeutische Wirkstoffe. Das auf diese Weise beschichtete Substrat soll mithin bewirken, dass biologische und körpereigene Substanzen wie Enzyme, Hormone, Antikörper, Nukleinsäure, Peptide oder Aminosäuren gebunden werden. Als bevorzugte funktionalisierende Reagenzien werden N-Hydroxysuccinimid-Aktivester-funktionalisierte Perfluorophenyl Azide (NHS-PFPAs) vorgesehen.

Als nachteilig an den bekannten Behältnissen hat sich jedoch herausgestellt, dass eine Derivatisierung des Perfluorophenylazids mittels NHS aufgrund einer Feuchtigkeitsempfindlichkeit des NHS eher ungeeignet ist für den Einsatz in flüssigen Medien, insbesondere Blut und EVF. Insbesondere erfordert ein derartig derivatisiertes Perfluorophenylazid eine geeignete Stabilisierung.

### Aufgabe

Es ist Aufgabe der vorliegenden Erfindung, ein alternatives Behältnis zur Verwahrung einer Körperflüssigkeit zu entwickeln, welches sich durch eine Beschichtung auszeichnet, die sich zur Stabilisierung der Körperflüssigkeit nach der Entnahme eignet.

### Lösung

Ausgehend von dem eingangs genannten Behältnis zur Verwahrung einer Körperflüssigkeit wird die vorstehende Aufgabe dadurch gelöst, dass die Beschichtung PEG/PEO-PPO-Copolymere, Poly-(3-Methacryloylaminopropyl)-(2-Carboxyethyl)-Dimethylmmonium-Carboxybetain-Methylacrylamid (pCBMAA-1) oder Polypeptid-basierte Blockcopotypeptide umfasst.

Im Hinblick auf die hydrophoben Eigenschaften von Kontaktflächen, die mit Blut oder extravasalen Flüssigkeiten in Kontakt kommen, ist eine derartige Beschichtung besonders vorteilhaft. Dies liegt darin begründet, dass sich typische Kontaktflächen, beispielsweise solche aus Polypropylen, zwar aufgrund ihrer chemisch inerten Eigenschaften gut als Material für ein Blutentnahmeröhrchen eignen, jedoch durch die Hydrophobie des Stoffes bei der Beschichtung des selbigen zu Schwierigkeiten führen. Insbesondere wird ein Auftragen von wässrigen Lösungen und Stoffen dahingehend erschwert, dass eine vollständige Benetzung der Oberfläche unterbleibt. Eine Bindung von wasserbasierten, chemischen Stoffen, welche die Degradationsprozesse von Blut und weiteren Körperflüssigkeiten verhindern, wird mithin gehemmt.

Die erfindungsgemäße Beschichtung ist dabei auf die Kontaktfläche des Behältnisses aufgebracht und wird an diese gebunden. Dabei kommt es bei Kontakt einer der vorstehenden Stoffe mit der Kontaktfläche des Behältnisses zur Bildung negativ geladener, nukleophiler Gruppen, wodurch eine stabile Bindung mit der Kontaktfläche eingegangen wird.

Ein besonderer Vorteil des erfindungsgemäßen Behältnisses besteht darin, dass hierdurch verhindert werden kann, dass es zu ungewollten Veränderungsprozesse der Körperflüssigkeiten in dem Behältnis kommt und die zu untersuchende Körperflüssigkeit vor einer Laboranalyse verändert wird und somit in Quantität und Qualität gegenüber der realen Zusammensetzung im Blut oder in der Körperflüssigkeit abweicht. Die Beschichtung tritt nämlich zwar direkt mit dem Blut oder der extravasalen Flüssigkeit in Kontakt, bewirkt jedoch keine chemische Reaktion. Dieses Verhalten ist insoweit wünschenswert, als dass darin die Voraussetzung dafür geschaffen wird, eine hohe Stabilisierung der Körperflüssigkeit in dem Behältnis zu sichern und somit die richtige klinische Entscheidung (Diagnose- oder Therapieentscheidung) treffen zu können. Ferner kann das Behältnis vorteilhafter Welse mittels eines einzigen Schritts beschichtet werden. So können Kosten eingepart werden.

Das PEG/PEO-PPO-Copolymer ist dabei vorzugsweise zusammengesetzt aus einem sternförmigen, 6-Arm Polyethylenglycol oder-ethylenoxid (PEG oder PEO) mit einer spezifischen Propylenoxid (PPO)-Modifikation zur Verhinderung der Kristallisation des Polymers.

Poly-(3-Methacryloylaminopropyl)-(2-Carboxyethyl)-Dimethylmmonium-Carboxybetain-Methylacrylamid (pCBMAA-1) ist elektrisch neutral, zwitterionisch und kosmotrop.

Die Polypeptid-basierten Blockcopolypeptide werden mittels rekombinanter DNA-Technologie hergestellt. Vorzugsweise sind diese zusammengesetzt aus elektrisch neutralen und proteinabweisenden Elastin-Polypeptid-Konstrukten. Die Polypeptidkonstrukte sind elektrisch geladen und bewirken je nach Ladungsselektivität die Anbindung des Konstrukts an Plasmabehandelte Oberflächen (positive Ladung). Ebenso sind zwitterionische Polypeptid-basierte Blockcopolypeptide, elektrisch neutrale Konstrukte, vorstellbar.

Gemäß einer vorzugsweisen Ausgestaltung des Behältnisses ist vorgesehen, dass das Behältnis aus einem Kunststoff, vorzugsweise Polypropylen, Polystyrol, Polyethylen, Polymethylmethacrylat, Polyimid, oder aus Glas gebildet ist. Die vorstehend genannten Materialien werden typischerweise im Bereich der Medizin verwendet und haben sich bislang aufgrund ihrer geringen Herstellungskosten insbesondere zur Herstellung von Einmalprodukten bewährt.

Vorzugsweise weist das Behältnis einen Verschlussdeckel oder eine Verschlusskappe vorzugsweise bestehend aus Polyethylen (PE) auf, um die Körperflüssigkeit luftdicht in dem Behältnis zu verschließen. Vorstellbar ist auch, dass die Verschlusskappe eine Membran besitzt, welche mittels einer Nadeln durchstochen werden kann, um die Körperflüssigkeit in das Behältnis einzulassen. Für den Fall einer Blutentnahme aus einer Patientenvene ist das Behältnis vorzugsweise evakuiert. Hierdurch kann das Blut nach dem Einstechen einer Nadel, welche über einen Schlauch mit der in das Behältnis eingeführten Nadel verbunden ist, in die Vene des Patienten mittels des Unterdrucks in das Behältnis gesogen werden. Alternativ besitzt das Behältnis eine im Innenraum angeordnete Kolbenstange mit einem Kolben, um die Körperflüssigkeit mittels einer Bewegung der selbigen in das Behältnis einzusaugen. Vorzugsweise ist der Verschlussdeckel aus Polyethylen (PE) und die Kolbenstange aus Polysytrol (PS) ausgebildet.

In einer bevorzugten Ausgestaltung des erfindungsgemäßen Behältnisses ist der Verschlussdeckel ebenfalls mit der Beschichtung versehen. Gleiches gilt für einen vorstehenden Kolben.

Die eingangs genannte Aufgabe wird ausgehend von einem Verfahren zur Beschichtung einer Kontaktfläche eines Behältnisses zur Verwahrung einer Körperflüssigkeit durch Auftragen einer Beschichtung, umfassend PEG/PEO-PPO-Copolymere, Poly-(3-Methacryloylaminopropyl)-(2-Carboxyethyl)-Dimethylmmonium-Carboxybetain-Methylacrylamid (pCBMAA-1) oder Polypeptid-basierte Blockcopolypeptide, gelöst.

Die in Bezug auf das erfindungsgemäße Behältnis genannten Vorteile werden analog mittels des vorbeschriebenen Verfahrens erzielt. Vergleichbar zum erfindungsgemäßen Behältnis liegt ein Vorteil des Verfahrens darin, dass die Beschichtung die ungewollten Veränderungsprozesse der Körperflüssigkeiten in dem Behältnis verhindert. Dieses Verhalten ist insoweit wünschenswert, als dass darin die Voraussetzung dafür geschaffen wird, eine hohe Stabilisierung der Körperflüssigkeit in dem Behältnis zu sichern und somit die richtige klinische Entscheidung (Diagnose- oder Therapieentscheidung) treffen zu können.

Vorzugsweise ist ein Aktivierungsschritt zur Verbesserung der Anhaftung der Beschichtung auf der Kontaktfläche des Behältnisses vorgesehen, wobei der Aktivierungsschritt mittels einer Plasmabehandlung erfolgt, wobei das Plasma aus einem Edelgas, vorzugsweise aus Argon, oder aus Sauerstoff gebildet ist. Die Plasmabehandlung bewirkt einen kontrollierten Abbau der äußersten Schicht des Polypropylens. Weiterhin werden durch die Plasmabehandlung nukleophile Gruppen gebildet, welche im Hinblick auf die Beschichtung besonders vorteilhaft sind. Dies führt dazu, dass die Beschichtung hierdurch besonders gut an die Kontaktfläche des Behältnisses binden kann.

Vorzugsweise erfolgt durch Einlassen des Stoffes in das Behältnis oder durch Einsprühen des Stoffes in das Behältnis erfolgt. Die chemischen Stoffe liegen entweder in flüssiger Form vor oder können aufgrund ihrer Wasserlöslichkeit zu einer wässrigen Lösung verarbeitet werden. Vorzugsweise wird die Kontaktfläche des Behältnisses durch ein Einfüllen der chemischen Stoffe in das Behältnis mit dem jeweiligen Stoff benetzt. Überschüssige Flüssigkeitsanteile werden anschließend durch ein Ausgießen der selbigen aus dem Behältnis entfernt. Vorstellbar ist auch, dass die Kontaktfläche mittels eines Sprühverfahrens mit dem chemischen Stoff versehen wird. In jedem Fall wird sichergestellt, dass die Kontaktfläche des Behältnisses vollständig mit dem chemischen Stoff benetzt wird.

### Ausführungsbeispiel:

Die vorstehend beschriebene Erfindung wird nachfolgend anhand von Ausführungsbeispielen, die in den Figuren dargestellt, jedoch nicht erfindungsgemäß sind, näher erläutert.

Es zeigt:
- Figur 1:: eine dreidimensionale Ansicht eines Blutentnahmeröhrchens,
- Figur 2:: einen Vertikalschnitt durch das Blutentnahmeröhrchen aus Figur 1 und
- Figur 3:: eine Strukturformel einer Primer-Beschichtung.

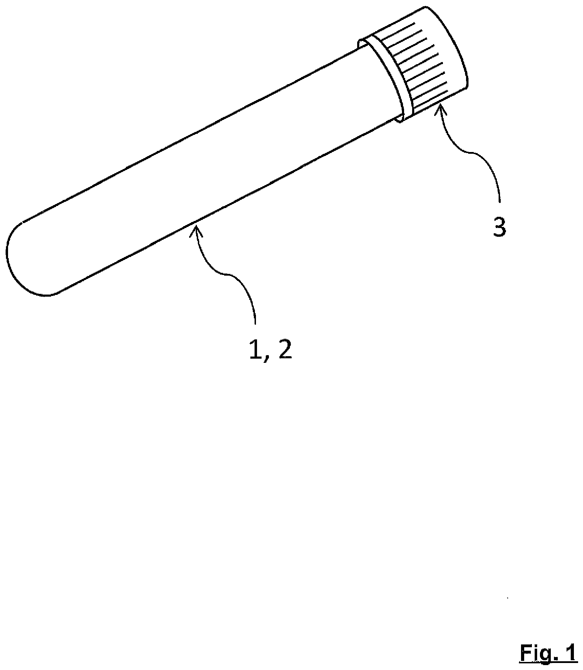

Figur 1 zeigt ein erstes Behältnis 1 in Form eines Blutentnahmeröhrchens 2 zur Verwahrung einer Blutprobe eines Patienten, das aus Polypropylen hergestellt und mit einer Primer-Beschichtung und einer zweiten Beschichtung zur Stabilisierung der Blutprobe versehen ist. Das Blutentnahmeröhrchen 2 ist zudem an einem Ende mit einem Verschlussdeckel 3 versehen. Mittels des Verschlussdeckels 3 wird ein luftdichtes Verschließen des Blutentnahmeröhrchens 2 bewirkt, um eine sichere Verwahrung zu gewährleisten und mögliche Interaktionen des Bluts mit der Umgebung zu verhindern.

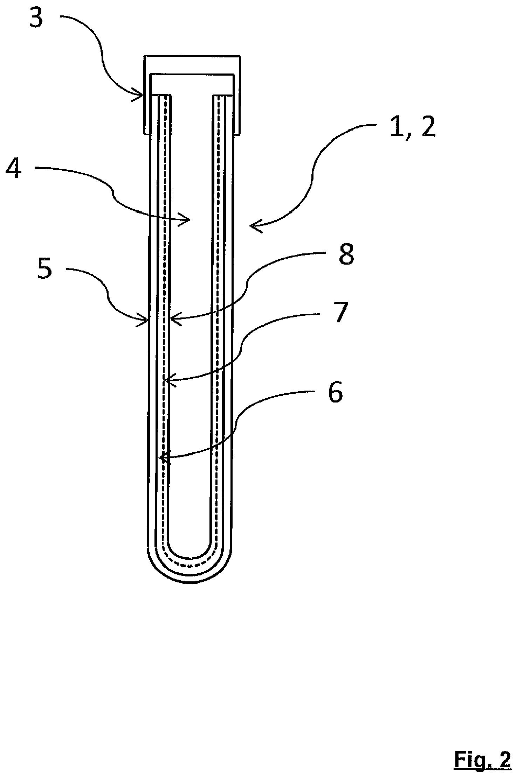

Figur 2 zeigt einen vertikalen Querschnitt durch das in Figur 1 gezeigte Blutentnahmeröhrchen 2. Eine einem Innenraum 4 zugewandte Wandung 5 des Blutentnahmeröhrchens 2 bildet eine Kontaktfläche 6 zwischen dem Blut und der Wandung 5 des Blutentnahmeröhrchens 2. Die Kontaktfläche 6 ist mit einer Primer-Beschichtung 7 bestehend aus einem Perfluorphenylazid (PFPA) mit einer Azid-Gruppe 9 und einer funktionellen Gruppe 10 versehen, wobei an der funktionellen Gruppe 10 ein Copolymer aus Poly(N-Vinylamin-co-N-vinyl Acetamid) angebunden ist. Weiterhin weist das Blutentnahmeröhrchen 2 eine zweite Beschichtung 8 auf, welche an die Primer-Beschichtung 7 angrenzt und mit dieser verbunden ist.

Um das Perfluorphenylazid gemäß des ersten Verfahrensschritts auf die Kontaktfläche 6 des Blutentnahmeröhrchens 2 aufzutragen, wird das selbige als wässrige Lösung mit einer Konzentration von 5 - 10 mg/mL in das Blutentnahmeröhrchen 2 gegeben. Es versteht sich, dass das Perfluorphenylazid auch in anderen Konzentrationen in der Lösung vorliegen kann. In jedem Fall benetzt die Lösung aufgrund der hohen Affinität des Perfluorphenylazids zu Polypropylen, welche durch die Hydrophobie des Perfluophenylazids gegeben ist, die Kontaktfläche 6 des Blutentnahmeröhrchen 2. Verbleibende Anteile des Perfluorphenylazids, welche sich als Flüssigkeitsüberschuss in dem Blutentnahmeröhrchen 2 ansammeln, werden aus dem Blutentnahmeröhrchen 2 entfernt.

In dem zweiten Verfahrensschritt wird die aufgetragene Lösung mittels UV-Strahlung an das Blutentnahmeröhrchen 2 gebunden. Hierbei wird das Perfluophenylazid derart aktiviert, die Azid-Gruppen 9 des selbigen irreversibel mit der Kontaktfläche 6 des Behältnisses 1 binden. Dies ist insbesondere durch die Radikalisierung des N₃ zu N° möglich. In einer chemischen Reaktion werden die Formamidgruppen des Copolymers säurehydrolysiert.

Anschließend wird die zweite Beschichtung 8 auf das Blutentnahmeröhrchen 2 aufgetragen. Die Beschichtung besteht aus PEG-PPO-Blockcopolymeren. Das PEG-PPO-Copolymer ist zusammengesetzt aus einem 6-Arm, sternförmigen Polyethylenglycol (PEG) und einer spezifischen Propylenoxid (PPO)-Modifikation zur Verhinderung der Kristallisation des Polymers. Das Copolymer liegt ebenfalls als wässrige Lösung vor. Das Auftragen des Copolymers erfolgt analog zum ersten Verfahrensschritt. Hierbei binden die Isozyanatgruppen des PEG-PPO-Copolymers an eine Amino-Gruppe 13 der Primer-Beschichtung 7. Zur Stärkung dieser Bindung erfolgt eine weitere Behandlung der innenliegenden Wandung 5 des Blutentnahmeröhrchens 2 mit UV-Strahlung. Vorstellbar ist ebenso, dass die Stärkung mittels einer Plasmabehandlung erfolgt.

Die Schichtdicken der in der Figur 2 gezeigten Beschichtungen 7, 8 sind zur besseren Übersicht überhöht, und damit nicht maßstabsgetreu, dargestellt.

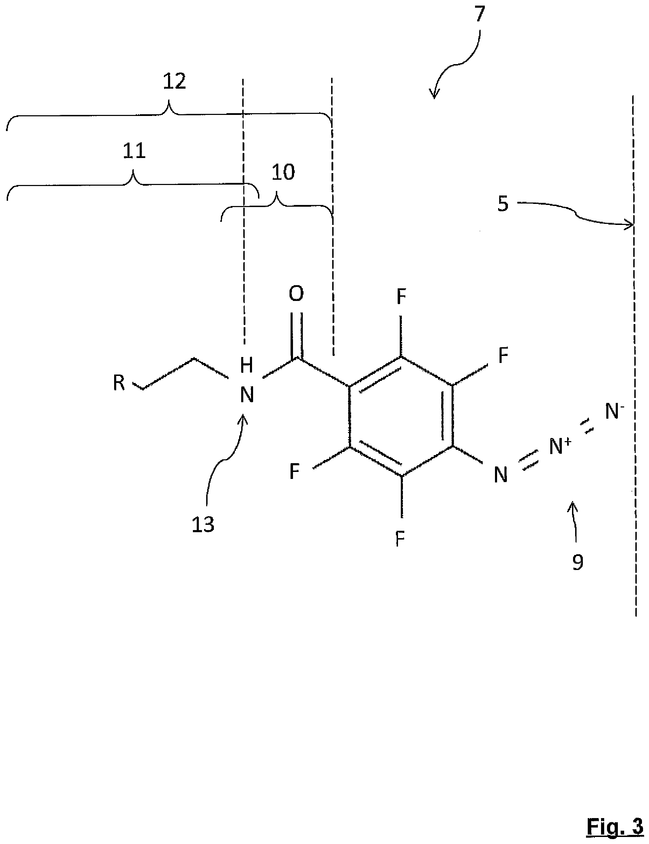

Figur 3 zeigt eine Strukturformel der Primer-Beschichtung 7, umfassend die Azid-Gruppe 9 und die funktionelle Gruppe 10. Dabei bindet die Azid-Gruppe 9 des Perfluorphenylazids an die Wandung 5 des Behältnisses 1. An der funktionellen Gruppe 10 des Perfluorphenylazids ist das Copolymer 11 Poly(N-Vinylamin-co-N-vinyl Acetamid) angebunden, sodass ein funktioneller Rest 12 des Perfluorphenylazids das Copolymer 11 umfasst. Eine Amino-Gruppe 13, welche von dem Copolymer 11 bereitgestellt wird, dient hierbei als Ankerpunkt für die zweite Beschichtung 8.

### Bezugszeichenliste:

- 1: Behältnis
- 2: Blutentnahmeröhrchen
- 3: Verschlussdeckel
- 4: Innenraum
- 5: Wandung
- 6: Kontaktfläche
- 7: Primer-Beschichtung
- 8: zweite Beschichtung
- 9: Azid-Gruppe
- 10: funktionelle Gruppe
- 11: Copolymer
- 12: funktioneller Rest
- 13: Amino-Gruppe
s

## Patentansprüche

1. Behältnis zur Verwahrung einer Körperflüssigkeit, insbesondere ein Blutentnahmeröhrchen , mit einem Innenraum zur Unterbringung der Körperflüssigkeit und einer den Innenraum umschließenden Wandung, wobei eine dem Innenraum des Behältnisses zugewandte Oberfläche der Wandung eine Kontaktfläche bildet, wobei die Kontaktfläche zumindest zum Teil mit einer Beschichtung versehen ist,
**dadurch gekennzeichnet, dass** die Beschichtung
a. PEG/PEO-PPO-Copolymere,
b. Poly-(3-Methacryloylaminopropyl)-(2-Carboxyethyl)-Dimethylmmonium-Carboxybetain-Methylacrylamid (pCBMAA-1) oder
c. Polypeptid-basierte Blockcopolypeptide
umfasst.

2. Behältnis nach Anspruch 1, **dadurch gekennzeichnet, dass** das Behältnis aus einem Kunststoff, vorzugsweise Polypropylen (PP), Polystyrol (PS), Polyethylen (PE), Polymethylmethacrylat (PMMA), Polyimid (PI), oder aus Glas gebildet ist.

3. Verfahren zur Beschichtung einer Kontaktfläche eines Behältnisses zur Verwahrung einer Körperflüssigkeit **gekennzeichnet durch** Auftragen einer Beschichtung, umfassend
a. PEG/PEO-PPO-Copolymere,
b. Poly---Dimethylmmonium-Carboxybetain-Methylacrylamid oder
c. Polypeptid-basierte Blockcopolypeptide.

4. Verfahren nach Anspruch 3, **gekennzeichnet durch** einen Aktivierungsschritt zur Verbesserung der Anhaftung der Beschichtung auf der Kontaktfläche des Behältnisses, wobei der Aktivierungsschritt mittels einer Plasmabehandlung erfolgt, wobei das Plasma vorzugsweise aus einem Edelgas, vorzugsweise aus Argon, oder aus Sauerstoff gebildet ist.

5. Verfahren nach Anspruch 4 oder 5, **dadurch gekennzeichnet, dass** das Auftragen der Beschichtung durch Einlassen des Stoffes in das Behältnis oder durch Einsprühen des Stoffes in das Behältnis erfolgt.
